# EUROPEAN PATENT APPLICATION

(11) **EP 3 409 889 A1**
(43) Date of publication of application: **05.12.2018**
(21) Application number: 18163781.0
(22) Date of filing: 23.03.2018
(51) Int. Cl.: F01D 5/18, F01D 5/28

(54) **LATTICE STRUCTURE IN COOLING PATHWAY BY ADDITIVE MANUFACTURE**

(30) Priority: 31.05.2017 US 201715609550
(71) Applicant: General Electric Company, Schenectady, NY 12345 (US)
(72) Inventor: LACY, Benjamin Paul, Greenville, SC South Carolina 29615 (US); MORGAN, Victor John, Greenville, SC South Carolina 29615 (US)
(74) Representative: Lee, Brenda

(57) **Abstract**

A hot gas path component 52, 100 of an industrial machine includes a cooling pathway 170, 200 with a lattice structure 220 therein. The component and lattice structure 220 are made by additive manufacturing. The component includes an outer surface 180 exposed to a working fluid having a high temperature; a thermal barrier coating 102 over the outer surface 180; an internal cooling circuit 86, 160; and a cooling pathway 170, 200 in communication with the internal cooling circuit 86, 160 and extending towards the outer surface 180. A lattice structure 220 is in the cooling pathway 170, 200 at the outer surface 180. The lattice structure 220 is configured to support the thermal barrier coating 102 over the cooling pathway 170, 200 and in response to a spall 222 in the thermal barrier coating 102 occurring over the cooling pathway 170, 200, allow a cooling medium 88, 190 from the internal cooling circuit 86, 160 to pass therethrough.

## Description

### GOVERNMENT CONTRACT

This invention was made with government support under contract number DE-FE0023965 awarded by the US Department of Energy. The government has certain rights in the invention.

### BACKGROUND OF THE INVENTION

The disclosure relates generally to cooling of components, and more particularly, to a cooling pathway of a hot gas path component that is made by additive manufacturing, and includes a lattice structure therein.

Hot gas path components that are exposed to a working fluid at high temperatures are used widely in industrial machines. For example, a gas turbine system includes a turbine with a number of stages with blades extending outwardly from a supporting rotor disk. Each blade includes an airfoil over which the hot combustion gases flow. The airfoil must be cooled to withstand the high temperatures produced by the combustion gases. Insufficient cooling may result in undo stress and oxidation on the airfoil and may lead to fatigue and/or damage. The airfoil thus is generally hollow with one or more internal cooling flow circuits leading to a number of cooling holes and the like. Cooling air is discharged through the cooling holes to provide film cooling to the outer surface of the airfoil. Other types of hot gas path components and other types of turbine components may be cooled in a similar fashion.

Although many models and simulations may be performed before a given component is put into operation in the field, the exact temperatures to which a component or any area thereof may reach vary greatly due to component specific hot and cold locations. Specifically, the component may have temperature dependent properties that may be adversely affected by overheating. As a result, many hot gas path components may be overcooled to compensate for localized hot spots that may develop on the components. Such excessive overcooling, however, may have a negative impact on overall industrial machine output and efficiency.

Despite the presence of cooling passages many components also rely on a thermal barrier coating (TBC) applied to an outer surface thereof to protect the component. If a break or crack, referred to as a spall, occurs in a TBC of a hot gas path component, the local temperature of the component at the spall may rise to a harmful temperature. This situation may arise even though internal cooling circuits are present within the component at the location of the spall. One approach to a TBC spall provides a plug in a cooling hole under the TBC. When a spall occurs, the plug is removed, typically through exposure to heat sufficient to melt the plug, the cooling hole opens and a cooling medium can flow from an internal cooling circuit fluidly coupled to the cooling hole. The plug may be porous to assist in its removal. This process reduces overcooling. Formation of the plug however is complex, requiring precise machining and/or precise thermal or chemical processing of materials to create the plug.

### BRIEF DESCRIPTION OF THE INVENTION

A first aspect of the disclosure provides a component for use in a hot gas path of an industrial machine, the component comprising: an outer surface exposed to a working fluid having a high temperature; a thermal barrier coating over the outer surface; an internal cooling circuit; a cooling pathway in communication with the internal cooling circuit and extending towards the outer surface; and a lattice structure in the cooling pathway at the outer surface, the lattice structure configured to support the thermal barrier coating over the cooling pathway and in response to a spall in the thermal barrier coating occurring over the cooling pathway, allow a cooling medium from the internal cooling circuit to pass therethrough, wherein the component is additively manufactured such that the lattice structure is integrally formed with the outer surface and the cooling pathway.

A second aspect of the disclosure provides a component for use in a hot gas path of an industrial machine, the component comprising: an outer surface exposed to a working fluid having a high temperature; a thermal barrier coating over the outer surface; an internal cooling circuit; a cooling pathway in communication with the internal cooling circuit and extending towards the outer surface; and a lattice structure within and integral with the cooling pathway, the lattice structure allowing a cooling medium to pass therethrough in response to a spall in the thermal barrier coating occurring over the cooling pathway.

A third aspect of the disclosure provides a method, comprising: additively manufacturing a hot gas path (HGP) component, the HGP component including: an outer surface, an internal cooling circuit, a cooling pathway in communication with the internal cooling circuit and extending towards the outer surface, and a lattice structure within and integral with the cooling pathway; and applying a thermal barrier coating to the outer surface, the lattice structure supporting the thermal barrier coating over the cooling pathway.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 is a schematic diagram of an illustrative industrial machine having a hot gas path component in the form of a gas turbine system.
FIG. 2 is a perspective view of a known hot gas path component in the form of a turbine blade.
FIG. 3 is a perspective view of a portion of a hot gas path component according to embodiments of the disclosure without a thermal barrier coating (TBC) thereon.
FIG. 4 is a perspective view of a portion of the HGP component of FIG. 3 including a thermal barrier coating according to embodiments of the disclosure.
FIG. 5 is a cross-sectional view of a portion of the HGP component including a lattice structure in a cooling pathway according to embodiments of the disclosure.
FIG. 6 is a cross-sectional view of a portion of the HGP component including a spall over the lattice structure in the cooling pathway according to embodiments of the disclosure.
FIG. 7 is an enlarged cross-sectional view of a portion of the HGP component with the lattice structure removed according to embodiments of the disclosure.
FIG. 8 is an enlarged cross-sectional view of a portion of the HGP component with a lattice structure in a cooling pathway according to embodiments of the disclosure.
FIG. 9 is an enlarged cross-sectional view of a portion of the HGP component with a lattice structure in a cooling pathway according to another embodiment of the disclosure.
FIGS. 10A-D are top views of various forms of cooling pathways and lattice structures according to embodiments of the disclosure.
FIG. 11 is a block diagram of an additive manufacturing process including a non-transitory computer readable storage medium storing code representative of an HGP component according to embodiments of the disclosure.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As an initial matter, in order to clearly describe the current disclosure it will become necessary to select certain terminology when referring to and describing relevant machine components within an industrial machine such as a gas turbine system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. The term "radial" refers to movement or position perpendicular to an axis. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. It will be appreciated that such terms may be applied in relation to the center axis of the turbine.

As indicated above, the disclosure provides a hot gas path (HGP) component including a cooling pathway having a lattice structure therein. The HGP component and the cooling pathway including the lattice structure are formed by additive manufacturing. When exposed by a spall in a thermal barrier coating (TBC) thereover, the lattice structure allows a cooling medium to pass therethrough. Prior to the spall occurring, the lattice structure supports the TBC and substantially prevents it from entering the cooling pathway. The additive manufacturing with the lattice structure thus also allows manufacture without TBC getting into the cooling pathway but allows passage of a cooling medium through cooling pathway if a spall occurs.

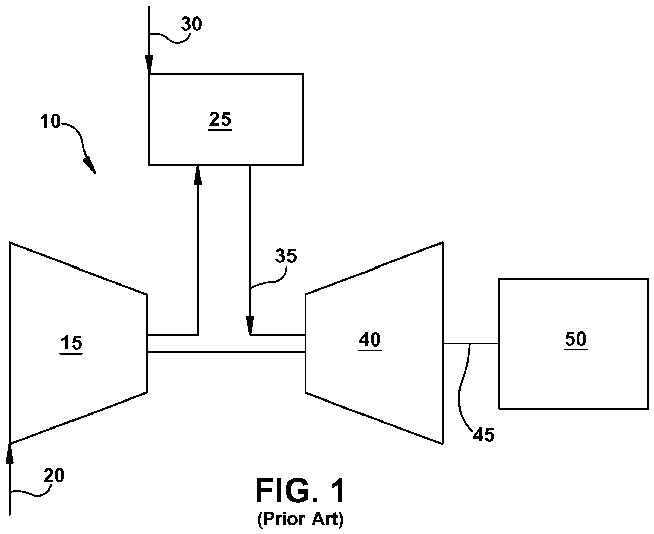

Referring now to the drawings, in which like numerals refer to like elements throughout the several views, FIG. 1 shows a schematic view of an illustrative industrial machine in the form of a gas turbine system 10. While the disclosure will be described relative to gas turbine system 10, it is emphasized that the teachings of the disclosure are applicable to any industrial machine having a hot gas path component requiring cooling. Gas turbine system 10 may include a compressor 15. Compressor 15 compresses an incoming flow of air 20, and delivers the compressed flow of air 20 to a combustor 25. Combustor 25 mixes the compressed flow of air 20 with a pressurized flow of fuel 30 and ignites the mixture to create a flow of combustion gases 35. Although only a single combustor 25 is shown, gas turbine system 10 may include any number of combustors 25. Flow of combustion gases 35 is in turn delivered to a turbine 40. Flow of combustion gases 35 drives turbine 40 so as to produce mechanical work. The mechanical work produced in turbine 40 drives compressor 15 via a shaft 45 and an external load 50 such as an electrical generator and the like.

Gas turbine system 10 may use natural gas, liquid fuels, various types of syngas, and/or other types of fuels and blends thereof. Gas turbine system 10 may be any one of a number of different gas turbine engines offered by General Electric Company of Schenectady, N.Y. and the like. Gas turbine system 10 may have different configurations and may use other types of components. Teachings of the disclosure may be applicable to other types of gas turbine systems and or industrial machines using a hot gas path. Multiple gas turbine systems, or types of turbines, and or types of power generation equipment also may be used herein together.

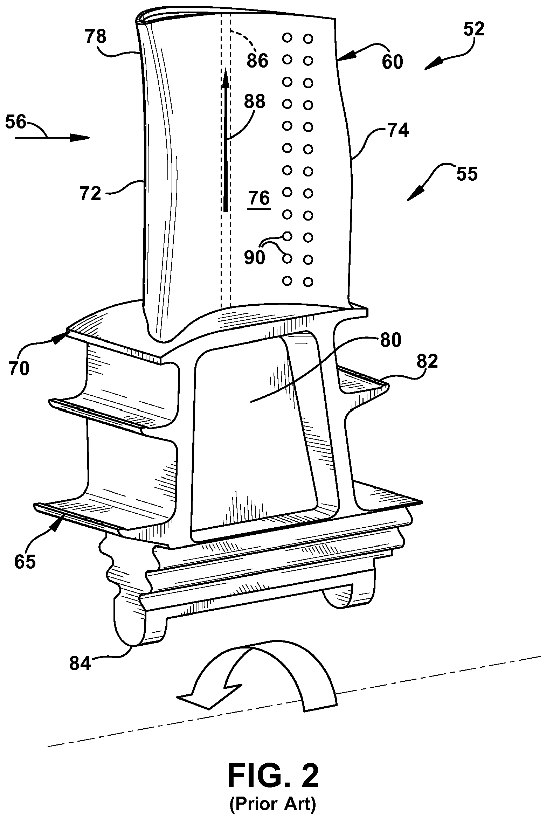

FIG. 2 shows an example of a hot gas path (HGP) component 52 in the form of a turbine blade 55 that may be used in a hot gas path (HGP) 56 of turbine 40 and the like. While the disclosure will be described relative to HGP component 52 in the form of turbine blade 55 and more specifically an airfoil 60 or wall thereof, it is emphasized that the teachings of the disclosure are applicable to any HGP component requiring cooling. Generally described, turbine blade 55 may include airfoil 60, a shank portion 65, and a platform 70 disposed between airfoil 60 and shank portion 65. Airfoil 60 generally extends radially upward from platform 70 and includes a leading edge 72 and a trailing edge 74. Airfoil 60 also may include a concave surface defining a pressure side 76 and an opposite convex surface defining a suction side 78. Platform 70 maybe substantially horizontal and planar. Shank portion 65 may extend radially downward from platform 70 such that platform 70 generally defines an interface between airfoil 60 and shank portion 65. Shank portion 65 may include a shank cavity 80. Shank portion 65 also may include one or more angel wings 82 and a root structure 84 such as a dovetail and the like. Root structure 84 may be configured to secure, with other structure, turbine blade 55 to shaft 45 (FIG. 1). Any number of turbine blades 55 may be circumferentially arranged about shaft 45. Other components and or configurations also may be used herein.

Turbine blade 55 may include one or more cooling circuits 86 extending therethrough for flowing a cooling medium 88 such as air from compressor 15 (FIG. 1) or from another source. Steam and other types of cooling mediums 88 also may be used herein. Cooling circuits 86 and cooling medium 88 may circulate at least through portions of airfoil 60, shank portion 65, and platform 70 in any order, direction, or route. Many different types of cooling circuits and cooling mediums may be used herein in any orientation. Cooling circuits 86 may lead to a number of cooling holes 90 or other types of cooling pathways for film cooling about airfoil 60 or elsewhere. Other types of cooling methods may be used. Other components and or configurations also may be used herein.

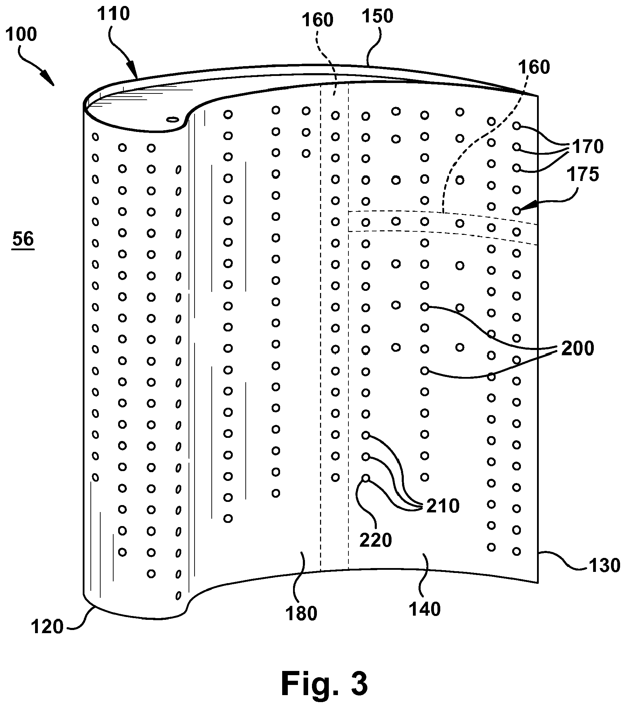

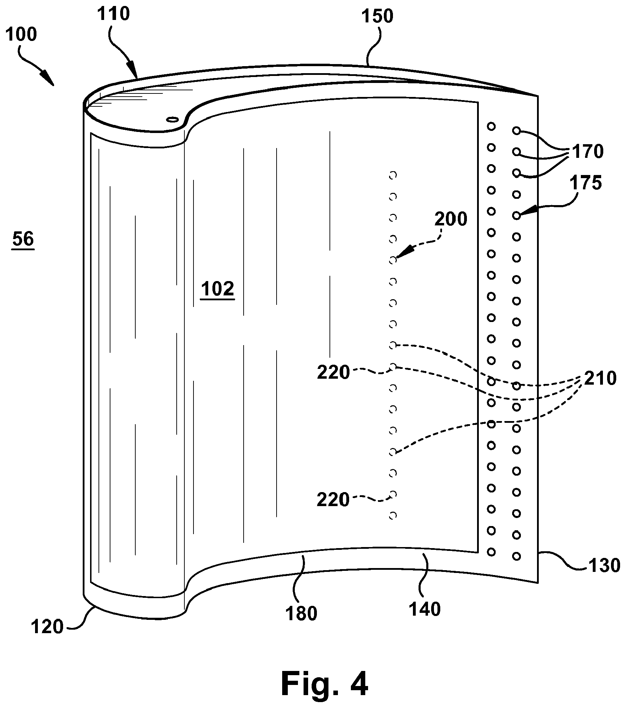

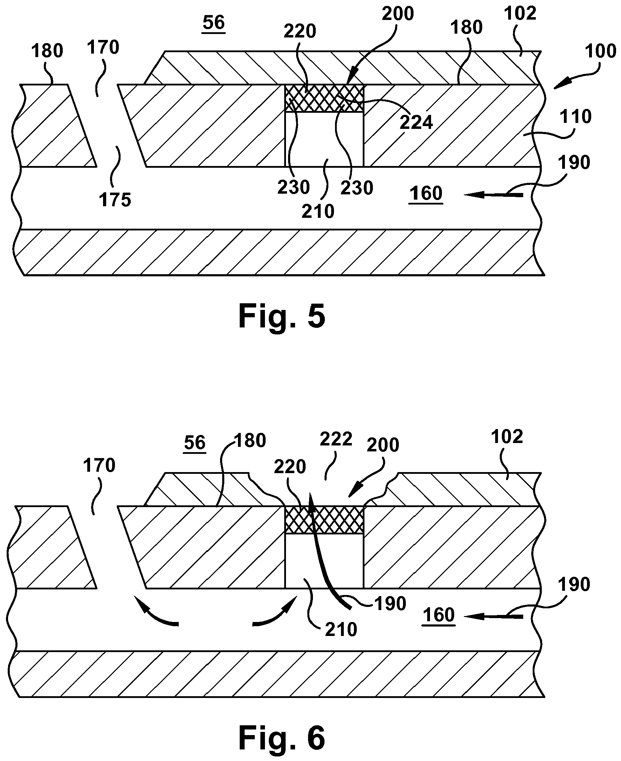

FIGS. 3-5 show an example of a portion of an HGP component 100 as maybe described herein. FIG. 3 is a perspective view of HGP component 100 without a thermal barrier coating (TBC) 102 thereon, FIG. 4 is a perspective view of HGP component 100 with TBC 102 thereon, and FIG. 5 is a cross-sectional view of a portion of HGP component with TBC 102. In this example, HGP component 100 may be an airfoil 110 and more particularly a sidewall thereof. HGP component 100 may be a part of a blade or a vane and the like. HGP component 100 also may be any type of air-cooled component including a shank, a platform, or any type of hot gas path component. As noted, other types of HGP components and other configurations may be used herein. Similar to that described above, airfoil 110 may include a leading edge 120 and a trailing edge 130. Likewise, airfoil 110 may include a pressure side 140 and a suction side 150. Airfoil 110 also may include one or more internal cooling circuits 160 (FIGS. 3 and 5) therein. As shown in phantom in FIG. 3 and shown in cross-section in FIG. 5, internal cooling circuits 160 may lead to a number of cooling pathways 170 such as a number of cooling holes 175. A variety of internal cooling circuits 160 maybe employed, not all of which are shown. Cooling holes 175 may extend through an outer surface 180 of airfoil 110 or elsewhere. Outer surface 180 is exposed to a working fluid having a high temperature. As used herein, "high temperature" depends on the form of industrial machine, e.g., for gas turbine system 10, high temperature may be any temperature greater than 100°C. Internal cooling circuits 160 and cooling holes 175 serve to cool airfoil 110 and components thereof with a cooling medium 190 (FIG. 5) therein. Any type of cooling medium 190, such air, steam, and the like, may be used herein from any source. Cooling holes 175 may have any size, shape, or configuration. Any number of cooling holes 175 maybe used herein. Cooling holes 175 may extend to outer surface 180 in an orthogonal or non-orthogonal manner. Other types of cooling pathways 170 may be used herein. Other components and or configurations may be used herein.

As shown in FIG. 3-5, HGP component 100, e.g., airfoil 110, also may include a number of other cooling pathways 200 according to embodiments of the disclosure. Cooling pathways 200 may include any cooling pathway in communication with internal cooling circuit 160 and extending towards outer surface 180 and employing a lattice structure 220 according to embodiments of the disclosure. Lattice structure 220 is configured to support a thermal barrier coating (TBC) 102 over cooling pathway 200 and in response to spall 222 (FIG. 6) in TBC 102 occurring over cooling pathway 200, allow cooling medium 190 from internal cooling circuit 160 to pass therethrough. That is, lattice structure 220 within cooling pathway 200 supports TBC 102 until a spall removes TBC 102. Thus, cooling pathways 200 are distinguishable from cooling pathways 170 and cooling holes 175 that are permanently open, i.e., with no other structure therein, to outer surface 180. Cooling pathways 200, as shown in FIGS. 4 and 5, may include a thermal barrier coating (TBC) 102 thereover.

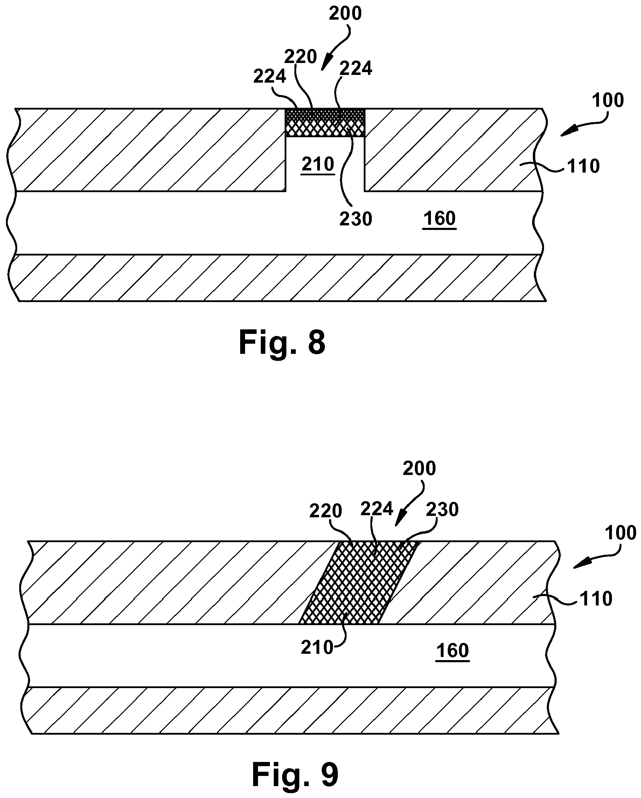

As shown in FIGS. 5-10C, cooling pathways 200 may be in the form of a number of cooling holes 210. Internal cooling circuits 160 are fluidly coupled to cooling holes 210 and serve to cool airfoil 110 and components thereof with a cooling medium 190. As noted, any type of cooling medium 190, such as air, steam, and the like, may be used herein from any source. Cooling holes 210 may have any size, shape (e.g., circular, round, polygonal, etc.), or configuration. Any number of cooling holes 210 may be used herein. As shown best in FIG. 5, cooling holes 210 may extend towards outer surface 180 in a manner similar to cooling holes 175, but include lattice structure 220 therein according to embodiments of the disclosure. Cooling pathway 200, i.e., cooling holes 210, may extend toward outer surface 180 in an orthogonal (FIG. 5) or non-orthogonal (FIG. 9) manner relative to outer surface 180. Other types of cooling pathways 200 may be used herein. Other components and or configurations may be used herein.

As shown in FIGS. 4 and 5, in contrast to cooling holes 175 (FIG. 3), TBC 102 is positioned over outer surface 180 in at least a portion of HGP component 100 to cover cooling pathways 200 and lattice structure 220 therein. TBC 102 may include any now known or later developed layers of materials configured to protect outer surface 180 from thermal damage (e.g., creep, thermal fatigue cracking and/or oxidation) such as but not limited to: zirconia, yttria-stabilized zirconia, a noble metal-aluminide such as platinum aluminide, MCrAlY alloy in which M may be cobalt, nickel or cobalt-nickel alloy. TBC 102 may include multiple layers such as but not limited to a bond coat under a thermal barrier layer.

As shown in FIG. 5, lattice structure 220 is in cooling pathway 200 at outer surface 180. As used herein, "at outer surface 180" indicates lattice structure 220 meets with outer surface 180 so as to support TBC 102. Lattice structure 220 is within and integral with cooling pathway 200. As shown in FIG. 6, lattice structure 220 is configured to, in response to a spall 222 in TBC 102 occurring over cooling pathway 200, allow cooling medium 190 from internal cooling circuit 160 to pass therethrough. Lattice structure 220 may have any three-dimensional interlaced structure capable of supporting TBC 102, i.e., when TBC 102 is applied and thereafter. Lattice structure 220 may have the form of, for example, a three-dimensional metal screen or filter having elements 224 arranged to create a plurality of openings 230 therebetween. The size of elements 224 may vary depending on a variety of factors such as but not limited to: the desired size of openings 230, the size of the melting beam (e.g., laser beam) used by the additive manufacturing system, and material strength. Plurality of openings 230 have sufficient size to allow cooling medium 190 to pass therethrough but elements 224 provide sufficient material to support TBC 102 when applied to outer surface 180 and thereafter. Plurality of openings 230 may have a spacing between, for example, approximately 0.10 millimeters (mm) and approximately 0.25 mm.

Lattice structure 220 substantially prevents TBC 102 from entering cooling pathway 200, i.e., TBC 102 only enters very small portions of lattice structure 220 and does not clog many if any openings 230. A variety of factors may determine how much or how far TBC 102 enters lattice structure 220 such as but not limited to: TBC 102 density and surface tension, size of openings 230 and size of elements 224 of lattice structure 220 between openings 230. While lattice structure 220 is capable of letting cooling medium 190 therethrough but not TBC 102, i.e., when the latter is applied, lattice structure 220 cannot be classified as a porous material, like a porous metal foam, as it is capable of being additively manufactured. HGP component 100 is additively manufactured such that lattice structure 220 is integrally formed with outer surface 180 and cooling pathway 200. Lattice structure 220 is made of the same material as the rest of HGP component 100, i.e., it is not a plug of other material like a polymer and includes a single material.

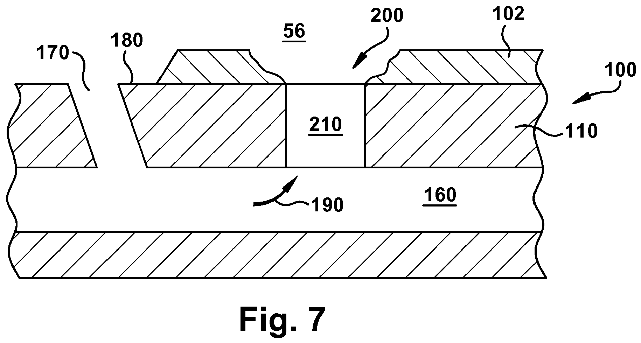

Spall 222 may include any change in TBC 102 creating a thermal path to outer surface 180 from HGP 56 not previously present, e.g., a break or crack in, or displacement of, TBC 102 creating a thermal path to outer surface 180. When spall 222 occurs, outer surface 180 would normally be exposed to the high temperatures and other extreme environments of HGP 56, where prior to spall 222 occurring outer surface 180 was protected by TBC 102. After spall 222 occurs, cooling medium 190 passes through cooling hole 210 and lattice structure 220 to outer surface 180. Lattice structure 220 may remain after spall 222, or, as shown in FIG. 7, may be removed at a predetermined temperature of lattice structure 220. As used herein, the "predetermined temperature of lattice structure" is a temperature at which lattice structure 220 will change state in such a way as to allow its removal. In many cases, as shown in FIGS. 7, exposure of lattice structure 220 to HGP 56 environment alone will provide the predetermined temperature sufficient for removal of lattice structure 220, e.g., through sublimation, ashing or melting thereof. Alternatively, lattice structure 220 may break away at joints to cooling hole 110.

As shown in FIGS. 8-10C, lattice structure 220 may have a variety of forms. In one embodiment, shown in FIG. 8, lattice structure 220 may have a varying density of openness within cooling pathway 200. That is, the size of openings 230 may be greater in one location within cooling pathway 200 than in another area. In FIG. 8, for example, openings 230 are larger closer to internal cooling circuit 160 than near outer surface 180. Other variations may also be possible. In FIGS. 5, 6 and 8, lattice structure 220 fills only a portion of cooling pathway 200, i.e., cooling hole 210. In other embodiments, as shown for example in FIG. 9, lattice structure 220 may fill an entirety of cooling pathway 200. Combinations of any of these embodiments may also be employed.

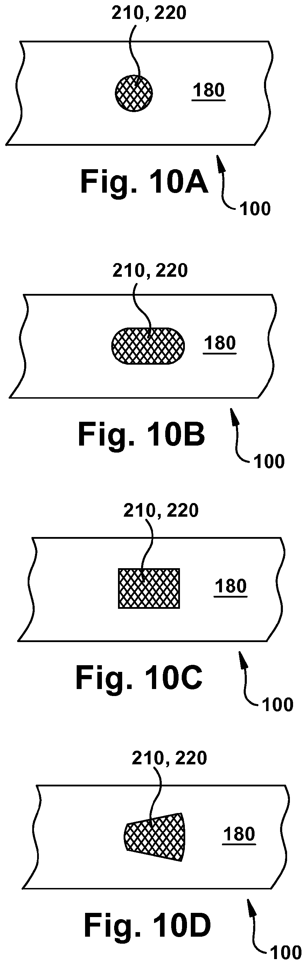

FIGS. 10A-D show various forms of cooling holes 210 or lattice structures 220 in outer surface 180. As illustrated, each may have a round (circular FIG. 10A or oval FIG. 10B) or a non-round cross-section (square or rectangular, FIG. 10C) at outer surface 180. Any non-round cross-section maybe employed, e.g., square, rectangular or other polygon. Alternatively, as shown in FIG. 10D, lattice structure 220 may also have a cross-section to fit any variety of diffuser, and cooling holes leading thereto could have any cross-section accommodating the diffuser shape. Cooling pathways 200 may also take different internal dimensions, shapes, etc.

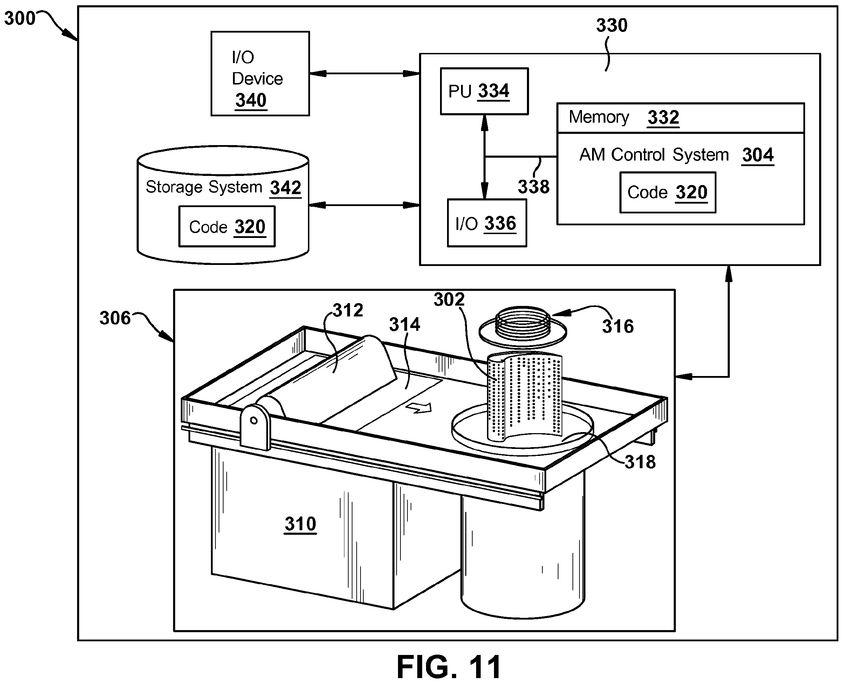

Referring to FIG. 11, in accordance with embodiments of the disclosure, HGP component 100 and lattice structure 220 may be additively manufactured such that lattice structure 220 is integrally formed with outer surface 180 and cooling pathway 200. Additive manufacturing also allows for easy formation of much of the structure described herein, i.e., without very complex machining. As used herein, additive manufacturing (AM) may include any process of producing an object through the successive layering of material rather than the removal of material, which is the case with conventional processes. Additive manufacturing can create complex geometries without the use of any sort of tools, molds or fixtures, and with little or no waste material. Instead of machining components from solid billets of plastic or metal, much of which is cut away and discarded, the only material used in additive manufacturing is what is required to shape the part. Additive manufacturing processes may include but are not limited to: 3D printing, rapid prototyping (RP), direct digital manufacturing (DDM), binder jetting, selective laser melting (SLM) and direct metal laser melting (DMLM).

To illustrate an example of an additive manufacturing process, FIG. 11 shows a schematic/block view of an illustrative computerized additive manufacturing system 300 for generating an object 302, i.e., HGP component 100. In this example, system 300 is arranged for DMLM. It is understood that the general teachings of the disclosure are equally applicable to other forms of additive manufacturing. AM system 300 generally includes a computerized additive manufacturing (AM) control system 304 and an AM printer 306. AM system 300, as will be described, executes code 320 that includes a set of computer-executable instructions defining HGP component 100 (FIGS. 5-10C) including lattice structure 220 in cooling pathway 200, to physically generate the component using AM printer 306. Each AM process may use different raw materials in the form of, for example, fine-grain powder, liquid (e.g., polymers), sheet, etc., a stock of which may be held in a chamber 310 of AM printer 306. In the instant case, HGP component 100 (FIGS. 5-10C) may be made of metal powder or similar materials. As illustrated, an applicator 312 may create a thin layer of raw material 314 spread out as the blank canvas from which each successive slice of the final object will be created. In other cases, applicator 312 may directly apply or print the next layer onto a previous layer as defined by code 320, e.g., where the material is a polymer or where a metal binder jetting process is used. In the example shown, a laser or electron beam 316 fuses particles for each slice, as defined by code 320, but this may not be necessary where a quick setting liquid plastic/polymer is employed. Various parts of AM printer 306 may move to accommodate the addition of each new layer, e.g., a build platform 318 may lower and/or chamber 310 and/or applicator 312 may rise after each layer.

AM control system 304 is shown implemented on computer 330 as computer program code. To this extent, computer 330 is shown including a memory 332, a processor 334, an input/output (I/O) interface 336, and a bus 338. Further, computer 330 is shown in communication with an external I/O device 340 and a storage system 342. In general, processor 334 executes computer program code, such as AM control system 304, that is stored in memory 332 and/or storage system 342 under instructions from code 320 representative of HGP component 100 (FIGS. 5-10C), described herein. While executing computer program code, processor 334 can read and/or write data to/from memory 332, storage system 342, I/O device 340 and/or AM printer 306. Bus 338 provides a communication link between each of the components in computer 330, and I/O device 340 can comprise any device that enables a user to interact with computer 330 (e.g., keyboard, pointing device, display, etc.). Computer 330 is only representative of various possible combinations of hardware and software. For example, processor 334 may comprise a single processing unit, or be distributed across one or more processing units in one or more locations, e.g., on a client and server. Similarly, memory 332 and/or storage system 342 may reside at one or more physical locations. Memory 332 and/or storage system 342 can comprise any combination of various types of non-transitory computer readable storage medium including magnetic media, optical media, random access memory (RAM), read only memory (ROM), etc. Computer 330 can comprise any type of computing device such as a network server, a desktop computer, a laptop, a handheld device, a mobile phone, a pager, a personal data assistant, etc.

Additive manufacturing processes begin with a non-transitory computer readable storage medium (e.g., memory 332, storage system 342, etc.) storing code 320 representative of HGP component 100 (FIGS. 5-10C). As noted, code 320 includes a set of computer-executable instructions defining object 302 that can be used to physically generate the object, upon execution of the code by system 300. For example, code 320 may include a precisely defined 3D model of HGP component 100 (FIGS. 5-10C) and can be generated from any of a large variety of well-known computer aided design (CAD) software systems such as AutoCAD®, TurboCAD®, DesignCAD 3D Max, etc. In this regard, code 320 can take any now known or later developed file format. For example, code 320 may be in the Standard Tessellation Language (STL) which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 320 may be translated between different formats, converted into a set of data signals and transmitted, received as a set of data signals and converted to code, stored, etc., as necessary. Code 320 may be an input to system 300 and may come from a part designer, an intellectual property (IP) provider, a design company, the operator or owner of system 300, or from other sources. In any event, AM control system 304 executes code 320, dividing HGP component 100 (FIGS. 5-10C) into a series of thin slices that it assembles using AM printer 306 in successive layers of liquid, powder, sheet or other material. In the DMLM example, each layer is melted to the exact geometry defined by code 320 and fused to the preceding layer.

Subsequent to additive manufacture, HGP component 100 (FIGS. 5-10C) may be exposed to any variety of finishing processes, e.g., minor machining, sealing, polishing, assembly to another part, etc. In terms of the present disclosure, TBC 102 may be applied to outer surface 180 of HGP component 100 and over lattice structure 220. TBC 102 may be applied using any now known or later developed coating techniques, and may be applied in any number of layers. As noted herein, lattice structure 220 supports TBC 102 when applied and thereafter, and substantially prevents TBC 102 from entering cooling pathway 200.

In operation, as shown in FIG. 6, in response to spall 222 in TBC 102 occurring over cooling pathway 200, lattice structure 220 allows cooling medium 190 to pass therethrough. In some embodiments, as shown in FIG. 7, a high temperature of HGP 56 may cause lattice structure 220 to break away, ash, melt, etc., so as to remove the lattice structure and allow cooling medium 190 to cool HGP component 100 where the spall occurs. As described herein relative to FIG. 8, lattice structure 220 may have varying density of openness within cooling pathway 200.

HGP component 100 according to embodiments of the disclosure provides a cooling pathway 200 that only opens in the area of spall 222 to cool that region and prevent damage to the underlying metal, which may significantly reduce nominal cooling flows. Use of additive manufacturing for HGP component 100 and lattice structure 220 thereof allows for cooling pathway 200 that does not fill with TBC 102, when applied and after application. Lattice structure 220 supports TBC 102, but allows cooling medium 190 to pass therethrough when spall 222 occurs.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following numbered clauses:
1. A component for use in a hot gas path of an industrial machine, the component comprising:
   an outer surface exposed to a working fluid having a high temperature;
   a thermal barrier coating over the outer surface;
   an internal cooling circuit;
   a cooling pathway in communication with the internal cooling circuit and extending towards the outer surface; and
   a lattice structure in the cooling pathway at the outer surface, the lattice structure configured to support the thermal barrier coating over the cooling pathway, and in response to a spall in the thermal barrier coating occurring over the cooling pathway, allow a cooling medium from the internal cooling circuit to pass therethrough,
   wherein the component is additively manufactured such that the lattice structure is integrally formed with the outer surface and the cooling pathway.
2. The component of clause 1, wherein the lattice structure has a varying density of openness within the cooling pathway.
3. The component of any preceding clause, wherein the lattice structure fills only a portion of the cooling pathway.
4. The component of any preceding clause, wherein the lattice structure fills an entirety of the cooling pathway.
5. The component of any preceding clause, wherein the lattice structure includes a plurality of openings having a spacing between approximately 0.10 millimeters (mm) and approximately 0.25 mm.
6. The component of any preceding clause, wherein the cooling pathway is at a non-orthogonal angle relative to the outer surface.
7. The component of any preceding clause, wherein the cooling pathway has a non-round cross-section at the outer surface.
8. A component for use in a hot gas path of an industrial machine, the component comprising:
   an outer surface exposed to a working fluid having a high temperature;
   a thermal barrier coating over the outer surface;
   an internal cooling circuit;
   a cooling pathway in communication with the internal cooling circuit and extending towards the outer surface; and
   a lattice structure within and integral with the cooling pathway, the lattice structure allowing a cooling medium to pass therethrough in response to a spall in the thermal barrier coating occurring over the cooling pathway.
9. The component of any preceding clause, wherein the lattice structure has a varying density of openness within the cooling pathway.
10. The component of any preceding clause, wherein the lattice structure fills only a portion of the cooling pathway.
11. The component of any preceding clause, wherein the lattice structure fills an entirety of the cooling pathway.
12. The component of any preceding clause, wherein the lattice structure supports the thermal barrier coating over the cooling pathway prior to the spall occurring in the thermal barrier coating.
13. The component of any preceding clause, wherein the cooling pathway is at a non-orthogonal angle relative to the outer surface.
14. The component of any preceding clause, wherein the cooling pathway and the lattice structure have a non-round cross-section at the outer surface.
15. A method, comprising:
   additively manufacturing a hot gas path (HGP) component, the HGP component including:
   an outer surface,
   an internal cooling circuit,
   a cooling pathway in communication with the internal cooling circuit and extending towards the outer surface, and
   a lattice structure within and integral with the cooling pathway; and applying a thermal barrier coating to the outer surface, the lattice structure supporting the thermal barrier coating over the cooling pathway.
16. The method of any preceding clause, further comprising, in response to a spall in the TBC occurring over the cooling pathway, allowing the cooling medium to pass through the lattice structure.
17. The method of any preceding clause, wherein the lattice structure substantially prevents the thermal barrier coating from entering the cooling pathway during the applying.
18. The method of any preceding clause, wherein the lattice structure has a varying density of openness within the cooling pathway.
19. The method of any preceding clause, wherein the lattice structure fills only a portion of the cooling pathway.
20. The method of any preceding clause, wherein the lattice structure includes a plurality of openings having a spacing between approximately 0.10 millimeters (mm) and approximately 0.25 mm.

## Claims

1. A component for use in a hot gas path (56) of an industrial machine, the component comprising:
an outer surface (180) exposed to a working fluid having a high temperature;
a thermal barrier coating (102) over the outer surface (180);
an internal cooling circuit (86, 160);
a cooling pathway (170, 200) in communication with the internal cooling circuit (86, 160) and extending towards the outer surface (180); and
a lattice structure (220) in the cooling pathway (170, 200) at the outer surface (180), the lattice structure (220) configured to support the thermal barrier coating (102) over the cooling pathway (170, 200), and in response to a spall (222) in the thermal barrier coating (102) occurring over the cooling pathway (170, 200), allow a cooling medium (88, 190) from the internal cooling circuit (86, 160) to pass therethrough,
wherein the component is additively manufactured such that the lattice structure (220) is integrally formed with the outer surface (180) and the cooling pathway (170, 200).

2. The component of claim 1, wherein the lattice structure (220) has a varying density of openness within the cooling pathway (170, 200).

3. The component of claim 1 or 2, wherein the lattice structure (220) fills only a portion of the cooling pathway (170, 200).

4. The component of claim 1 or 2, wherein the lattice structure (220) fills an entirety of the cooling pathway (170, 200).

5. The component of any preceding claim, wherein the lattice structure (220) includes a plurality of openings (230) having a spacing between approximately 0.10 millimeters (mm) and approximately 0.25 mm.

6. The component of any preceding claim, wherein the cooling pathway (170, 200) is at a non-orthogonal angle relative to the outer surface (180).

7. The component of any preceding claim, wherein the cooling pathway (170, 200) has a non-round cross-section at the outer surface (180).

8. A component for use in a hot gas path (56) of an industrial machine, the component comprising:
an outer surface (180) exposed to a working fluid having a high temperature;
a thermal barrier coating (102) over the outer surface (180);
an internal cooling circuit (86, 160);
a cooling pathway (170, 200) in communication with the internal cooling circuit (86, 160) and extending towards the outer surface (180); and
a lattice structure (220) within and integral with the cooling pathway (170, 200), the lattice structure (220) allowing a cooling medium (88, 190) to pass therethrough in response to a spall (222) in the thermal barrier coating (102) occurring over the cooling pathway (170, 200).

9. The component of claim 8, wherein the lattice structure (220) has a varying density of openness within the cooling pathway (170, 200).

10. The component of claim 8 or 9, wherein the lattice structure (220) fills only a portion of the cooling pathway (170, 200).

11. The component of claim 8 or 9, wherein the lattice structure (220) fills an entirety of the cooling pathway (170, 200).

12. The component of any of claims 8 to 11, wherein the lattice structure (220) supports the thermal barrier coating (102) over the cooling pathway (170, 200) prior to the spall (222) occurring in the thermal barrier coating (102).

13. The component of any of claims 8 to 12, wherein the cooling pathway (170, 200) is at a non-orthogonal angle relative to the outer surface (180).

14. The component of any of claims 8 to 13, wherein the cooling pathway (170, 200) and the lattice structure (220) have a non-round cross-section at the outer surface (180).

15. A method, comprising:
additively manufacturing a hot gas path (HGP) component (52, 100), the HGP component (52, 100) including:
an outer surface (180),
an internal cooling circuit (86, 160),
a cooling pathway (170, 200) in communication with the internal cooling circuit (86, 160) and extending towards the outer surface (180), and
a lattice structure (220) within and integral with the cooling pathway (170, 200); and
applying a thermal barrier coating (102) to the outer surface (180), the lattice structure (200) supporting the thermal barrier coating (102) over the cooling pathway (170, 200).
